# EUROPEAN PATENT SPECIFICATION

(11) **EP 2 509 028 B1**
(45) Date of publication and mention of the grant of the patent: **19.08.2015**
(21) Application number: 11160967.3
(22) Date of filing: 04.04.2011
(51) Int. Cl.: G06K 9/32, G06K 9/46, G06K 9/62

(54) **Method and system for optically detecting and localizing a two-dimensional, 2D, marker in 2D scene data, and marker therefor**
Verfahren und System zur optischen Erkennung und Ortung eines 2D-Markierers in 2D-Szenendaten und Markierer dafür
Procédé et système pour détecter optiquement et localiser un marqueur bidimensionnel 2D dans des données de scènes en 2D et marqueur correspondant

(43) Date of publication of application: 10.10.2012
(73) Proprietor: Deutsche Telekom AG, 53113 Bonn (DE); Technische Universität Berlin, 10623 Berlin (DE)
(72) Inventor: SWAMINATHAN, Rahul, 10119 Berlin (DE); BURKARD, Simon, 10243 Berlin (DE)
(74) Representative: Vossius & Partner Patentanwälte Rechtsanwälte mbB

(56) References cited:
- B Atcheson ET AL: "CALTag: High Precision Fiducial Markers For Camera Calibration", 15th International Workshop on Vision, Modeling and Visualization, 15 November 2010 (2010-11-15), XP55004316, Retrieved from the Internet: URL:http://www.cs.ubc.ca/nest/imager/tr/20 10/Atcheson_VMV2010_CALTag/files/caltag.pd f [retrieved on 2011-08-08]
- PINTARIC T: "An adaptive thresholding algorithm for the augmented reality toolkit", AUGMENTED REALITY TOOLKIT WORKSHOP, 2003. IEEE INTERNATIONAL TOKYO, JAPAN 7 OCT. 2003, PISCATAWAY, NJ, USA,IEEE, 1 January 2003 (2003-01-01), pages 71-71, XP010713746, DOI: 10.1109/ART.2003.1320431 ISBN: 978-0-7803-8240-4
- WOLFGANG BIRKFELLNER* ET AL: "A Modular Software System for Computer-Aided Surgery and Its First Application in Oral Implantology", IEEE TRANSACTIONS ON MEDICAL IMAGING, IEEE SERVICE CENTER, PISCATAWAY, NJ, US, vol. 19, no. 6, 1 June 2000 (2000-06-01), XP011035986, ISSN: 0278-0062
- OWEN C B ET AL: "What is the best fiducial?", AGUMENTED REALITY TOOLKIT, THE FIRST IEEE INTERNATIONAL WORKSHOP SEP. 29, 2002, PISCATAWAY, NJ, USA,IEEE, 1 January 2002 (2002-01-01), pages 97-104, XP010620359, ISBN: 978-0-7803-7680-9
- FIALA M ED - GANG PAN ET AL: "ARTag, a Fiducial Marker System Using Digital Techniques", COMPUTER VISION AND PATTERN RECOGNITION, 2005 IEEE COMPUTER SOCIETY CONFERENCE ON, IEEE, PISCATAWAY, NJ, USA, vol. 2, 20 June 2005 (2005-06-20), pages 590-596, XP010817653, DOI: 10.1109/CVPR.2005.74 ISBN: 978-0-7695-2372-9
- DINGDING WANG ET AL: "K-Subspace Clustering", 7 September 2009 (2009-09-07), MACHINE LEARNING AND KNOWLEDGE DISCOVERY IN DATABASES, SPRINGER BERLIN HEIDELBERG, BERLIN, HEIDELBERG, PAGE(S) 506 - 521, XP019128316, ISBN: 978-3-642-04173-0 * Section 3 *
- MARK FIALA: "Designing Highly Reliable Fiducial Markers", TRANSACTIONS ON PATTERN ANALYSIS AND MACHINE INTELLIGENCE, IEEE, PISCATAWAY, USA, vol. 30, no. 7, 1 July 2010 (2010-07-01), pages 1317-1324, XP011294802, ISSN: 0162-8828

## Description

### Background of the Invention

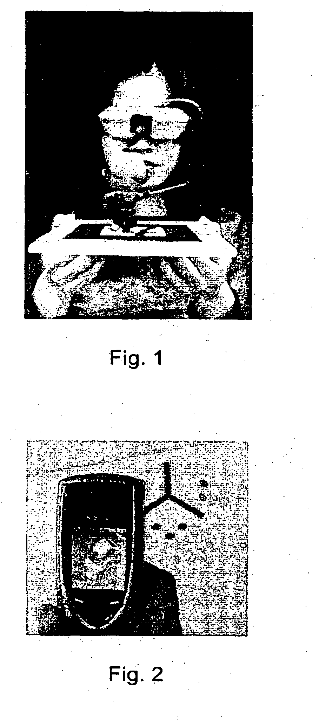

All Augmented Reality (AR) applications that require precise real-time knowledge of the camera position with respect to the local environment around them need to use some metrically known marker to begin with. This marker can be either a three dimensional (3D) known shape whose features are easily detected and extracted, or a two-dimensional (2D) marker in the form of a printed pattern as shown in Fig.1. Fig. 1 shows s typical example of AR using a 2D marker that is detected and used for augmenting the world with a metrically scaled 3D object (see Kato, H., Billinghurst, M., Poupyrev, I., Imamoto, K., Tachibana, K., "Virtual Object Manipulation on a Table-Top AR Environment.", in Proc. of the International Symposium on Augmented Reality, pp.111-119, (ISAR 2000), Munich, Germany).

Knowing the set of points on the marker (their exact position relative to one another), one can easily determine the camera's position relative to these points. The points on the marker, such as the four corners of the 2D pattern shown in Fig. 1 determine the local coordinate frame (X, Y, Z-axis) relative to which the camera's pose (position and orientation) is determined.

In general a marker that provides metric information such as scale and pose to an AR system can be either 3D or 2D in nature. The main objective of a marker is to determine the perspective of the camera observing the scene. In principle the marker provides point features in the image, whose geometric relationships in the real world are known. This enables the rendering or augmentation of the world view through the camera with objects that are coherent with pose and size to what is seen through the camera.

A 2D marker provides their relative metric position in a plane, while a 3D marker provides a known set of points in 3D whose correspondences in the image need to be detected. A 3D marker providing minimally 8 points is sufficient to determine the perspective relationship of the camera to this world. In contrast, a 2D marker does not provide this relationship, unless also the camera has been previously calibrated for. While clearly the 3D marker provides more information about the camera and the scene, it is not as simple to create as a 2D marker which can be trivially printed on a sheet of paper.

In Möhring, M., Lessig, C. and Bimber, O., "Video See-Through AR on Consumer Cell Phones", in Proc. 3rd IEEE/ACM international Symposium on Mixed and Augmented Reality (ISMAR 04), 2004, pp. 252-253 there is presented a system for tracking 3D markers on a mobile phone (see Fig. 2). This was one of the first few works that showed a video see-through augmented reality on a standard mobile phone device. It supported the detection and differentiation of different 3D markers, and correct integration of rendered 3D graphics into the live video stream. Such a 3D marker provides the minimum number of known 3D points in a single image to enable computing the "projection matrix". This projection matrix encapsulates the pose of the camera as well as how any 3D point in the world would project in this view, thereby enabling Augmented Reality without need for a priory camera calibration. Thus, the third dimension of points on the marker provides all the needed information for Euclidean pose estimation of the camera and further 3D augmentation of the scene with virtual objects

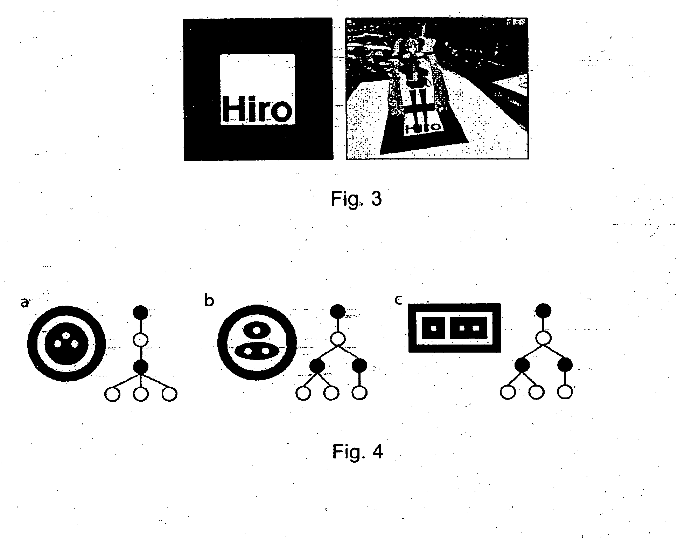

Fig. 3 shows a typical ARToolkit marker and the associated AR display on it. In order to achieve geometrically accurate augmentation, the camera needs to be calibrated a priory to use. 2D markers such as that shown in Fig. 3 are more commonly used in AR systems as visual markers. They are simple to create, and print and more amenable and accessible to the masses with need for elaborate 3D construction.

There are two predominant 2D marker systems in use for various applications today which are discussed in the following. Both the systems have been used for various AR and interaction tasks.

The most standard marker used in most AR applications is the so-called ARToolkit. The biggest advantage of this marker based system is the fact that it can be personalized with a coded pattern in the center of choice. The marker there not only acts as a geometric reference but also to recognize one from another (see Kato, H. and Billinghurst , M., "Marker Tracking and HMD Calibration for a Video-based Augmented Reality Conferencing System", in Proc. of the 2nd International Workshop on Augmented Reality (IWAR 99). October, San Francisco, USA, and Kato, H., Billinghurst, M., Poupyrev, I., Imamoto, K., Tachibana, K., "Virtual Object Manipulation on a Table-Top AR Environment.", in Proc. of the International Symposium on Augmented Reality, pp.111-119, (ISAR 2000), Munich, Germany). The advantage of the ARToolkit based markers is that it allows for multiple markers with different inner patterns to be recognized. However, at larger distances the ARToolkit and similar marker methods do not seem to work as robustly. Furthermore, many systems similar to the ARToolkit use complex computations including contour detection and Hough transforms for line (marker edge) detection that make it computationally expensive.

Another system is the so-called Reactivision. This system consists of novel marker designs and a different approach to most other marker detection methods. Instead of performing contour detection or edge detection followed by "Hough transforms" for detecting the bounding lines of the marker, they perform a simpler image threshold followed by computing a region adjacency graph of the black and white blobs (see Bencina, R., Kaltenbrunner, M. and Jorda, S., "Improved Topological Fiducial Tracking in the reacTIVision System", In Proc. IEEE Workshop at Computer Vision and Pattern Recognition (CVPR), 2005) on their specially designed marker as shown in Fig. 4 (see Bencina, R. and Kaltenbrunner, M., The Design and Evolution of Fiducials for the reacTIVision System", in Proc. 3rd International Conference on Generative Systems in the Electronic Arts, 2005). The adjacency graph essentially encodes as a left heavy tree the black and white blobs as shown in Fig. 4. The Reactivision system can provide a coarse estimate of the markers' position and orientation because the features it uses are perspective dependent and hence inaccurate. While this is perfectly reasonable for tangible user interfaces such as multi-touch tables (see Bencina, R. and Kaltenbrunner, M., The Design and Evolution of Fiducials for the reacTIVision System", in Proc. 3rd International Conference on Generative Systems in the Electronic Arts, 2005), it is insufficient for robust AR applications requiring strong geometric reasoning as it fails to accurately localize feature points/corners needed for accurate geometric computations. Furthermore, the method relies on complex marker patterns as shown in Fig. 4 requiring the use of good optics and computationally strong computers as claimed by the creators of Reactivision themselves.

Another system is known from *"*CALTAG: High Precision Fiducial Markers for Camera Calibration" by B. Atcheson et al. in Vision, Modeling and Visualization (2010).

Marker patterns are known from "Designing Highly Reliable Fiducial Markers" by M. Fiala in IEEE Transactions on Pattern Analysis and Machine Intelligence (2010).

The design of markers and methods to detect them are strongly inter-related. Mobile AR applications require fast robust and accurate detection of the marker (including geometric pose estimation) to enable real-time AR. Moreover, it is required for mobile applications to work under various illuminations and perspectives and at varying distances.

### Summary of the Invention

Previous marker detection methods either localized the marker using computationally expensive methods (edge detection and Hough transforms etc), or were fast but failed to accurately localize the marker in spite of the need for good cameras. In contrast, the invention provides a method to detect and localize a 2D marker using minimal computational resources while at the same time providing robust and accurate localization for AR applications where precise geometric reasoning is required.

The method of the invention can in the best case estimate the precise location of the marker practically within three passes of the image (theoretically even within two passes). In the first pass the image is threshold into a binary black and white image while processing it to detect contiguous blobs within the image. These blobs are then linearly analyzed to determine whether they are a marker. The marker is actually detected in the method of the invention without need to extract edges and determine corners. This is done in the second phase again without need for edge detection and Hough transform based complexity.

According to a first aspect, the invention provides a method for optically detecting and localizing a two-dimensional, 2D, marker in 2D scene data, comprising the steps of:
a) providing 2D scene data in form of a digital image;
b) thresholding the provided image into a binary black and white image while processing it to detect contiguous areas within the image; and
c) linearly analyzing said contiguous areas to determine whether they are a marker.

Step c) may comprise a step of calculating the Euler number of white areas in the thresholded binary image. Preferably, the method further comprises the steps of comparing the calculated Euler numbers of the white areas with the given Euler number of the marker to be detected and discarding those white areas whose Euler number does match with the given Euler number.

In a preferred embodiment, step b) comprises a step of receiving a user input pointing to the general location of the marker in the image. A region around this user inputted location may then be used to automatically determine the appropriate threshold.

The method preferably further comprises a step of constantly updating the threshold. For example, the marker position in the previous frame of the digital image is used to re-compute a threshold for the next frame.

The method may further comprise a step of sequential labelling of objects in the binary image in order to find connected components, wherein in a single pass of the image every pixel is labelled as either belonging to the background or a foreground object with unique ID.

It is preferred that the method comprises a step of detecting the corners of contiguous areas within the image whose Euler number matches with the given Euler number. For example, it comprises a step of analyzing the bounding areas of the contiguous areas by scanning along every bounding box edge for a cluster with white pixels. The method may further comprise a step of sampling from two opposite directions along each single boundary edge until occurrences of a cluster with white pixels.

Furthermore, the method may comprise a step of estimating hidden corners. According to an exemplary implementation, the estimation of hidden corners is performed by 1) collecting a sample of points along the marker boundary between the two end points; 2) estimating two line candidates; 3) assigning to each line its member points amongst the sampled points, wherein every point belongs to that line to which it is nearest; 4) for each of the two sets of member points, fitting a line to estimate the line they lie on; and 5) repeating steps 3) and 4) until convergence.

In an exemplary implementation, for example using a mobile device such as mobile phone, step a) provides a continuous sequence of image frames.

The method may further comprise a step of finding an orientation of a detected marker.

In the method of the invention, the marker to be detected may comprise a marker pattern comprising a white square component with three black square areas centred thereon and forming an equilateral triangle, and further comprising a black border area enclosing said white square component, wherein the gaps between the black square areas and the black border area are equally distributed.

The method may further comprise a step of determining the centroids of the three black areas within the marker, and a step of determining which two black areas are parallel to any side of the square from the computed marker edge lines.

Furthermore, the method may comprise a step of removing jitter.

The step of providing 2D scene data may comprises acquiring in electronic memory an image of the 2D scene. The image is, for example, acquired with a camera.

The method preferably comprises the step of constantly updating the threshold. For example, the marker position in the previous frame of the digital image is used to re-compute a threshold for the next frame.

The method is preferably computer implemented in that it is run on a processor of a suitably programmed electronic device.

According to second aspect, the invention provides a method in a mobile device for optically detecting and localizing a two-dimensional, 2D, marker in 2D scene data, comprising the steps of:
a) providing 2D scene data in form of a digital image;
b) thresholding the provided image into a binary black and white image while processing it to detect contiguous areas within the image; and
c) linearly analyzing said contiguous areas to determine whether they are a marker.

Another aspect of the invention provides a mobile device adapted to optically detect and localize a two-dimensional, 2D, marker in 2D scene data, comprising a camera for providing 2D scene data in form of a digital image; and a processor being configured for thresholding the provided image into a binary black and white image while processing it to detect contiguous areas within the image; and being configured for linearly analyzing said contiguous areas to determine whether they are a marker. The mobile device may be a mobile phone or a smartphone, or, in general, any mobile and/or fixed system or device with a camera. Also tablet computers are encompassed.

Another aspect of the invention provides a system for optically detecting and localizing a two-dimensional, 2D, marker in 2D scene data, i.e., in an image of a scene, comprising a camera for providing 2D scene data in form of a digital image; and a processor being configured for thresholding the provided image into a binary black and white image while processing it to detect contiguous areas within the image; and being configured for linearly analyzing said contiguous areas to determine whether they are a marker.

Another aspect of the invention provides a computer-readable medium having recorded thereon computer-executable instructions for implementing the method of the invention.

Another aspect of the invention provides a medium having printed thereon a marker configured for use in a method according to the invention.

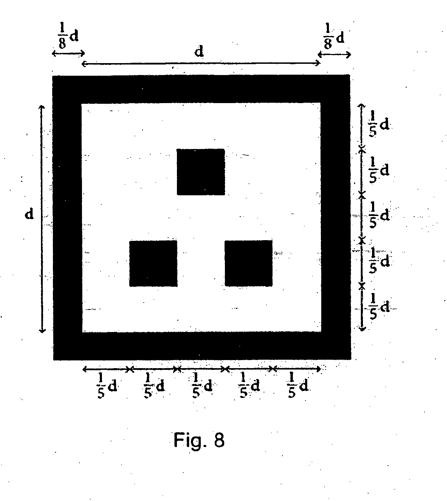

Another aspect of the invention provides a two-dimensional marker pattern as shown in Fig. 8.

Another aspect of the invention provides a two-dimensional marker pattern comprising a white square component with three black square areas centred thereon and forming a triangle, for example an equilateral or isosceles triangle, and further comprising a black border area enclosing said white square component. The gaps between the black square areas and the black border area may be equally distributed. The two-dimensional marker pattern may be for use in a method according to the invention.

The invention provides an elegant solution to the generic marker detection and pose estimation problem, that is both fast and simple yet reliable. The method enables 2D camera pose detection on smart phone and other mobile devices in real-time enabling a slew of AR and other applications. The method can detect corners of the marker even when corners are missing or occluded by other objects in the image.

### Brief Description of the Drawings

In the following, the invention will be described with reference to the drawings, in which:
- Fig. 1: shows a typical example of AR using a 2D marker that is detected and used for augmenting the world with a metrically scaled 3D object;
- Fig. 2: shows the use of a 3D marker for AR applications;
- Fig. 3: shows a typical conventional ARToolkit marker and the associated AR display on it;
- Fig. 4: shows some sample markers and their region-adjacency graphs;
- Fig. 5: visualizes the marker detection method according to the invention;
- Fig. 6: shows detection of corners (a) ad the estimation of hidden corners (b);
- Fig. 7: shows multiple steps to estimate the marker comers;
- Fig. 8: shows the Euler-Marker according to the invention;
- Fig. 9: shows the overall flow of the mobile marker detection method;
- Fig. 10: shows a binary image section of marker component being inversed and labelled; and
- Fig. 11: shows detection of marker localisation.

According to the invention, the marker is defined in terms of the general topology of its construction. It is assumed that the marker is essentially white in colour with a number of black bodies or areas embedded in it. The spatial distribution of black bodies (holes) within the white marker, define it similar to the Reactivision marker. The number and distribution of these "holes" in the marker amounts to determining the Euler Number (see, e.g., http://www.mathworks.com/help/toolbox/images/ref/bweuler.html) [] of white bodies in the thresholded binary image. By determining the Euler number of white blobs or areas in the image, it can be directly determined whether the blob represents a marker. This eliminates many false positives without need for edge detection computations.

The method starts out from an acquired image of a 2D scene containing the marker.

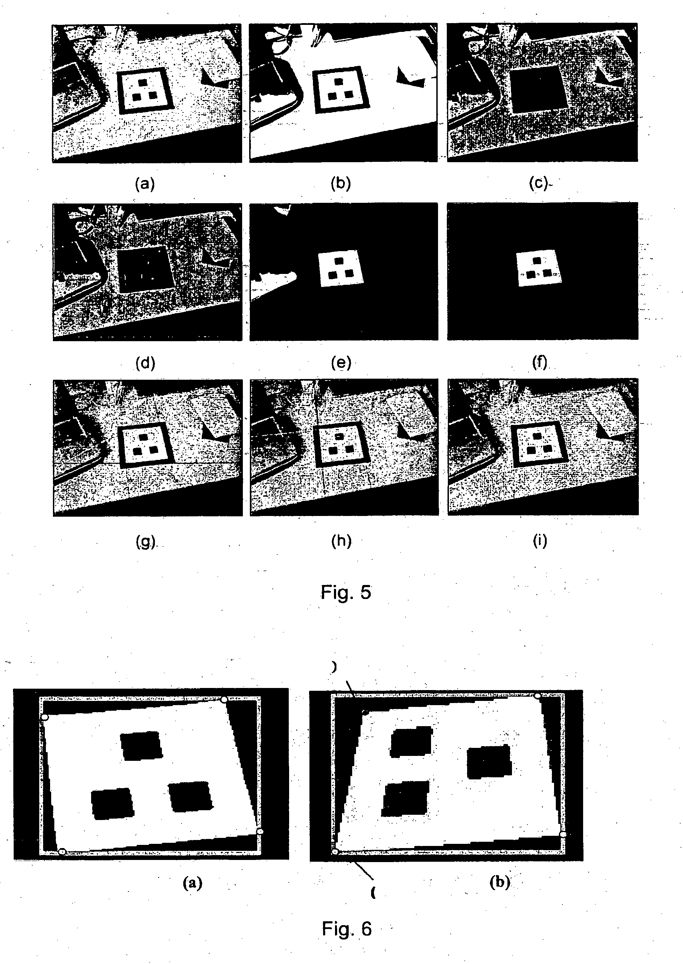

Fig. 5 visualizes, by means of an example, the marker and the detection method according to the invention. Fig. 5 (a) shows the acquired image of the marker placed on a table with other clutter. After adaptively thresholding the image to obtain the image shown in Fig. 5 (b), sequential labeling is applied to get the image shown in Fig. 5 (c), a labeled set of objects in the image. Analyzing the bounding box sizes as well as the Euler number of the various blobs, the probable image regions containing the blob are reduced to those shown in Fig. 5 (e). Analyzing the area based constraints on the holes, the image shown in Fig. 5 (f) is determined to be detected marker in the image. Robust corner estimation is then applied to iteratively (max 3 iterations) determine the marker edges which are then intersected to determine the corners. This approach is very robust to image and thresholding noise as well as to occlusions of the marker corners.

### Adaptive Image Thresholding

The detection method needs to be able to deal with fluctuations of light intensity during runtime and must work successfully in both dark and bright environments. The use of a static luminance threshold value when binarizing the image is therefore not reasonable.

The invention preferably uses a semi―automatic method to determine the threshold. If the marker is not detected (due to inaccurate threshold values) the user can point to the general location of the marker in the image. A small region around this location is then used to automatically determine the appropriate threshold.

It should be noted that as the user moves the camera, automatic gain control (AGC) and Automatic White Balance (AWB) can change the intensity of observed images. As a result, the threshold needs to be constantly updated. This is achieved with a simple bootstrap approach and using the previous frame's marker position to re-compute a threshold for the next frame. This allows for gradual change in illumination as well as white balance and gain of the camera.

### Binary Object Labelling

As seen in Fig. 5 (b), thresholding provides an image with a number of white "bodies" which could contain the marker. Since the marker contains a specific number of black "holes", each of these white blobs has to be processed independently. In order to do this, it is required to identify which pixel belongs to which unique white body. This process is called sequential labelling of objects in a binary image. Essentially in a single pass of the image one can label every pixel as either belonging to the background (0) or a foreground object with unique ID. A pixel is assigned an ID based on its immediate neighbours. Ambiguous labels and collisions are dealt with within this standard algorithm (see wiki:seqnLabelling for details). The result of this process is a labelled image where every island white body is uniquely identified as shown in Fig. 5 (c).

Again referring to Fig. 5 (c), (d), some light coloured background objects may appear as one large "blob" or object in the labelled image. Towards enabling a robust and rapid elimination of false positives, blobs that are either too large (or too small) from consideration are simply rejected, focussing only on the reasonably sized blobs in the sequentially labelled image as shown in Fig 5 (e).

### The Euler Number of Object Blobs

The marker preferably used according to the invention consists of a white background into which are distributed a sequence of black "holes". Given one white object with N black holes in it, the Euler number of this object is given by *1-N.* In case of a marker as shown, e.g., in Fig. 5, the white marker body consists of three black holes, giving a marker Euler number of -2. The Euler number is now computed for the reasonably sized white blobs/areas and those with Euler number -2 is detected thereby reducing the number of possible markers drastically. In practice since typically only one marker is used, the probability of finding other image regions (blobs) with a similar Euler number is rather rare.

### Robustness Issues

As mentioned above, it is rather rare but not impossible that other blobs in the image might have the same (-2) Euler number. In this case further robustness constraints need to be applied to reject such false positives. Amongst the simplest are constraints on the relative sizes of the holes. Similar to rejecting very large and very small objects in the labelling step, one can reject holes that are too small. Often, holes are formed which are a few pixels big due to noise in image data or thresholding that are easily rejected leaving behind only the most likely marker region of the image (see Fig. 5 (f)).

### Marker Corner Detection

Detecting the bounding box of the region that most probably (based on Euler number and area of holes) is only part of the problem. In order to perform accurate AR, one needs to extract the corners of the marker precisely in order to estimate the position and orientation of the camera.

In most cases, the image containing the detected marker is as shown in Fig. 6 (a), where every corner of the marker essentially defines the bounding box. The goal of finding all marker corners seems to be quite straightforward as the corners can be easily found by sampling from two opposite directions along each single boundary edge until occurrences of the marker component (white pixels). On each boundary line we therefore get two occurrences which are supposed to lie very close to each other so that it can be assumed a marker vertex is located between these two points. Thus, a simple linear scan along every edge of the bounding box reveals the corresponding marker corner trivially as shown in Fig. 6 (a). This detection method is referred to herein as *'fast corner estimation*'.

Depending on the perspective in which the image was acquired, it is also possible that the corners do not in fact define the bounding box. One such example is shown in Fig. 6 (b). Clearly scanning along the edges reveals only three corners. Moreover, the left and bottom edge of the bounding box both provide the same corner (identified in Fig. 6 (b) as (; bottom left corner). In such cases, the "hidden" corner (identified in Fig. 6 (b) as); top left corner) needs to be estimated by other means. The method according to the invention for marker corner estimation that is robust to such cases as well to partial occlusion of the corners is described below.

### Robust Marker Corner Detection

The robust corner detection approach is based on an iterative estimation of the four marker edges rather than the corners directly. The final marker corners are then determined by simply intersecting these edge lines. Robust line estimation leads to a much more robust estimate of the corners even when the corner itself is occluded and thus not visible in the image as shall be demonstrated.

In order to determine the marker corners, first all four marker edges are estimated. In order to determine the marker edges, it is needed to determine a starting vertex and in clockwise (or anti-clockwise) direction a termination vertex. These vertices simply represent end points between which can lie up to two edges. It is noted that the previous 'fast corner estimation' method determines exactly this, end points or extremities between which may exist multiple marker edges.

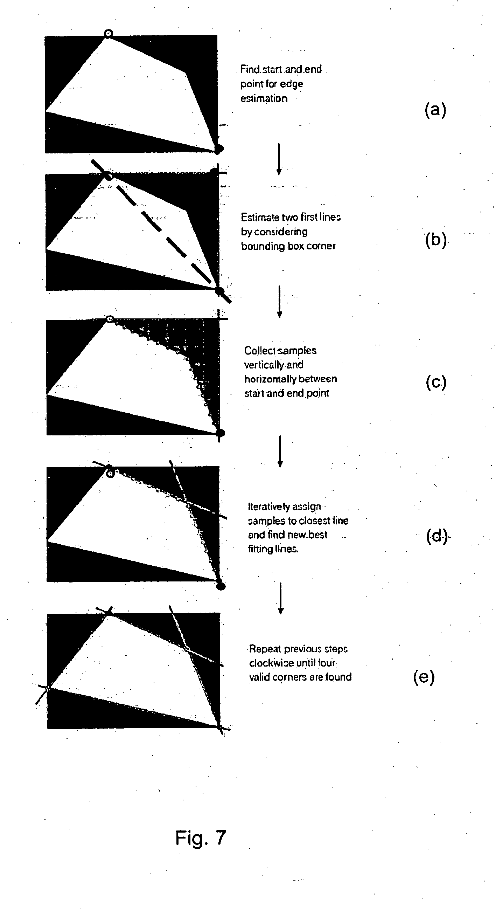

The 'fast corner estimation' method is used to determine an ordered set of "vertices". The vertices are ordered either in clockwise or anti-clockwise fashion and only represent temporary edge endings and not the actual marker corners. Between any two consecutive "vertices" there may exist up to two marker edges. Consecutive pairs of vertices are chosen as the "start" (green) and "end" point (red) as shown by the dotted arrows in Fig. 7 (a) and determine the potential marker edges between them (In Fig. 7, the "green" points are the ones lying on the top horizontal edge of the bounding area, and the "red" points are the ones lying on the right vertical edge of the bounding area). It is cycled through the "vertices" until all consecutive (including last and first) vertex pairs have been used to determine the set of marker edges.

In the following, the iterative approach to determine the connecting marker edges between any pair of end points is described.

Once a valid "start" and "end" point are found the next goal is the estimation of the underlying marker edges between them. This is achieved as an iterative approach similar to *k-means* clustering. Points between the two end points are sampled along the marker boundary efficiently, and then the k = 2 lines that they belong to are determined. This is done by the following steps:
1. Collect a sample of points along the marker boundary between the two end points.
2. Start with a guess or estimation of the two line's parameters.
3. Assign to each line its member points amongst the sampled points. Every point "belongs" to that line to which it is nearest.
4. For each of the two sets of member points, we fit a line, to estimate the line they lie on. These lines now represent the k = 2 solutions for possible marker edges.
5. Repeat Steps 3 and 4 until convergence.

**Step 1: Sampling points:** Starting at one end point, along the bounding box borders we scan orthogonally for the marker (white pixel) boundary. Repeating such scans several times between the start and end point both vertically and horizontally gives a set of sample points which are all located on the marker's edge (see Fig. 7 (c)). The offset between the scanning lines and hence the total number of samples depends on the known size of the marker mask. Typically a set of 20-40 points are sufficient.

**Step 2: Initial Line Guess:** A first rough estimate of the two possible lines are those connecting the end points and the corner that is located between both end points (see Fig. 7 (b): one line connects the start point and the boundary corner, the second line is defined by the end point and that corner. This simple assumption is valid as the marker is a convex shape. As a result the two possible marker edges (lines) can only intersect one another in a point that lies on the side of the line joining the end points (dotted line in Fig. 7 (b)) and the in-between corner (point at the top right corner of the bounding area) as shown in Fig. 7 (b).

**Step 3: Line memberships:** For every sampled point along the marker boundary, its distance to each of hypothesized lines is determined. The point is then said to belong to (be a member of) that line to which it is closest.

**Step 4: Line memberships:** Given the member points for each line, the lines are re-fit as shown in Fig. 7(d) using their member points. This step essentially refines the line estimates.

Steps 3 and 4 are repeated iteratively several times until convergence is achieved. In Fig. 7 (d) the two resulting lines are illustrated. The sample points in the figure (on the inclined line intersecting the "green" point on the top horizontal edge) belong to the first line, whereas the sample points (on the inclined line intersecting the "red" point at the bottom right corner of the bounding area) are closest to the second line.

Convergence of the above iterative approach can be defined in many ways. It is possible that the two lines initially hypothesized have the same parameters, or more likely, one line "dominates" and the other has very few "member points". A line hypothesis is rejected if the number of member points is too low compared to the other. If the lines have similar parameters (similar slope for example), then all the sampled points are used to determine one single line. In all other cases two distinct lines can be determined, indicating the presence of a hidden corner.

After repeating the above marker edge estimation method for all pairs of consecutive vertices, an estimate of the marker edges is known. Depending on noise, perspective, and aliasing artefacts, more than four edges can be possibly determined. In these cases, the shortest edges between two long edges are rejected, providing four marker edges. The four final marker corners are finally defined as the intersection points of these four final valid lines as shown in Fig. 7(e).

The term "marker corner detection" is in fact a misnomer. The method of the invention determines the corners computationally. First the best fit lines that represent the edges of the marker is estimated without need for any edge detection nor Hough transforms. The computation and line fitting is linear and extremely fast. Furthermore, by determining the marker corners as the intersection of consecutive marker edge lines results in very robust estimates of the corners. Not only are "hidden" corners detected as in Fig. 7 (e), but also corners not visible (due to occlusion or not being in the field of view) are also detected robustly.

The procedure for generic marker detection described above can be used as basis for efficient marker detection on smartphones and other mobile devices. In a mobile scenario the device serves as origin for source images, as output device for visualizing the results and also as processor for performing the computational efforts of marker detection. These premises require several enhancements and adjustments to the generic approach presented above.

On the one hand real-time marker detection and a fluent and coherent output of the detection results is demanded whereas on the other hand only limited computation power is available on mobile devices. High speed and low complexity of the marker detection algorithm are therefore essential requirements. Changing lighting conditions while using mobile devices as well as poor quality and low resolution of the source images also demand for a robust marker design and further customizations to the detection method.

The following describes the distinctive features and characteristics of the 2D marker detection method of the invention adapted for usage on mobile devices.

The marker according to the invention is designed in such way that robustness regarding large distances between camera and marker is ensured. It also is resistant to changing lighting and illumination of the scene. After luminance threshold is applied to the image, the individual shape and structure of the marker still is present and determinable. In addition, the design and arrangement of the marker and thus the Euler number of the component is as unique as possible compared to other ordinary components in the surroundings.

The design of the marker is shown in Fig. 8. The marker consists of a large white square component with three black square holes centred on the inside and forming an equilateral triangle. The Euler number of our marker hence is -2. Only black and white is used and no colours as it provides high contrast and is therefore quite immune to illumination and AWB changes. The spacing between the white and black regions ensures robust detection and localization even at large distances and low camera resolutions.

A thick black border encloses the marker in order to make it separable from any underlying surface. The gaps between the black holes and the black border are equally distributed and large enough to make the white component and its holes - and thus the Euler Number of the marker - distinguishable at relatively large distances and bad illumination.

The arrangement of the marker holes as a triangle, for example an isosceles or an equilateral triangle, leads to an asymmetry of the marker making it possible to determine the orientation of the marker unambiguously. The orientation is needed only to order the extracted marker corners in the image and determine correspondences with the known corners on the physical marker.

In the mobile scenario the marker detection algorithm is applied to a continuous sequence of images (image frames), which are provided by a mobile camera. The mobile device is supposed to be held e.g. by the user's hand and so the position of the camera relatively to the marker position is most likely being changed from frame to frame. Although the complete detection algorithm could be performed on every single input frame, for speed one can use the previous frame's marker locality to reduce computations.

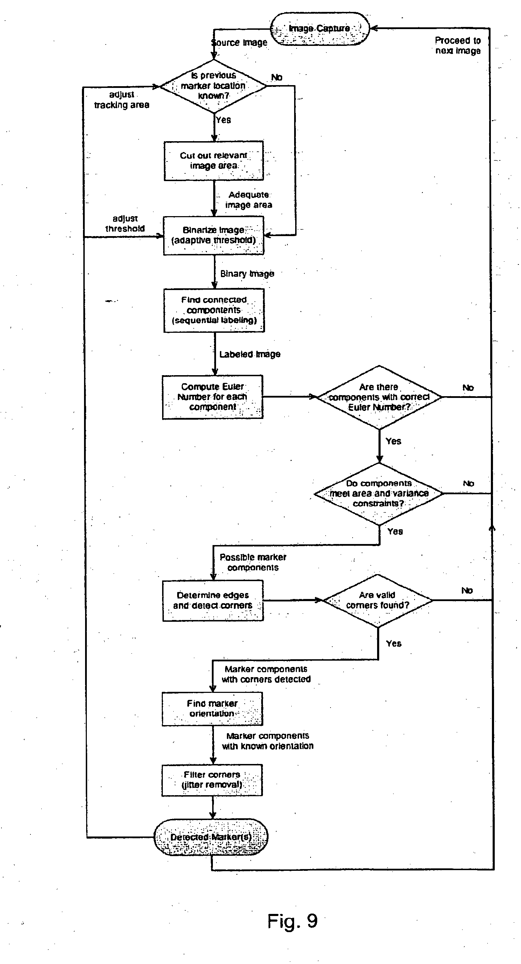

Fig. 9 shows the overall flow of the mobile marker detection method.

In case that the 2D image position of the marker is known from the previous frame and by assuming that the marker position does not change rapidly, marker detection is first performed within a rectangular region around the previous marker position. Ignoring other distant image parts speeds up the detection algorithm significantly.

Speed upon the mobile device can be achieved by performing, thresholding, and sequential labelling while maintaining bounding boxes of the various image bodies at the same time. This single pass approach provides unique image blobs/components and their pixel areas that might contain the marker. By considering only those components with reasonable pixel area, within a single pass of the image the image area needing attention can be reduced drastically.

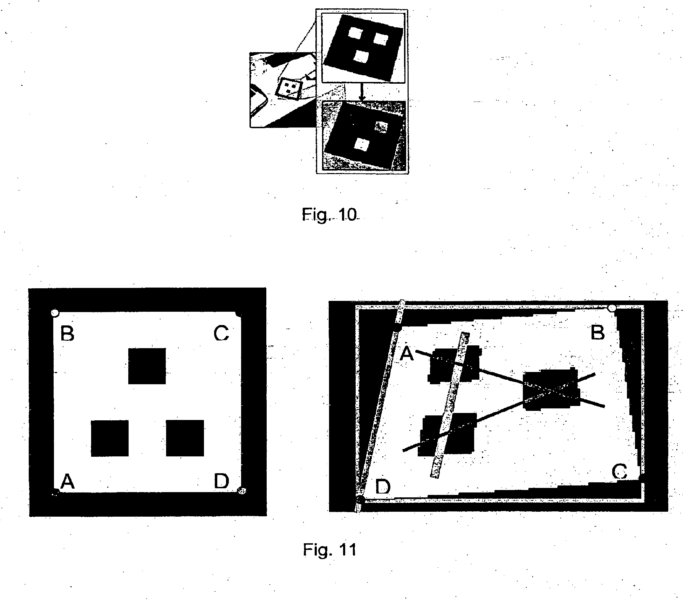

Possible marker components are found by computing the Euler numbers of the detected connected components. Only those components with an Euler number of -2 are considered henceforth as before. The Euler number is computed by analyzing the inverted binary image of each component after zeroing out other components. This makes holes appear as connected components which are measured. This gives information about the number and the characteristics of potential holes within one component and therefore on its individual Euler Number (see Fig. 10).

Each component possessing the sought-after Euler number has to meet two more constraints before being accepted as possible marker component. The first check verifies that all three holes of the component are larger then a certain threshold size. The second check is based on the fact that all holes on the marker template have the similar size, i.e. the sizes' variance ideally is zero. The check consequently removes those components whose holes sizes vary a lot. Eventually a set of components remains that very likely represent all markers placed in the captured scene.

The method for marker corner detection is as described above. When it comes to mobile devices however, we do not have the luxury to run multiple until convergence. As a consequence the maximum number of iterations is restricted to two. After the corners are determined one final task for the mobile marker detection still remains ― that of marker corner labelling.

In order to accurately perform localization, it is imperative that we not only determine the corners of the marker precisely, but also establish the correct correspondence between the image corners and those of the marker in the real world. This is achieved very quickly by first determining the centroids of the three holes within the marker. Then, it is determined which two holes are parallel to any side of the square from the computed marker edge lines. The pair of centroids that are parallel to any edge determine the base of the marker AD. The other centroid then further disambiguates orientation thereby providing an unambiguous correspondence labelling as shown in Fig. 11.

Fig. 11 shows in the left picture a real-world marker with labelled corners A, B, C, D, and in the right picture the automatically determined correspondences in the image of the marker at an arbitrary orientation. The orientation edge AD aligns better with the line joining the "centroid-line" of black "holes" shown in bold, than any other "edge -- centroid-line" pair. This, together with the remaining centroid closer to BC determines the pose of the marker and thereupon the correspondence to the real-world marker corners.

Thus, after marker detection using Euler numbers and our robust edge based corner detection can we also determine an exact correspondence between precise image corners of the marker and the world coordinates of the marker.

While the invention has been illustrated and described in detail in the drawings and foregoing description, such illustration and description are to be considered illustrative or exemplary and not restrictive. It will be understood that changes and modifications may be made by those of ordinary skill within the scope of the following claims. In particular, the present invention covers further embodiments with any combination of features from different embodiments described above and below.

Furthermore, in the claims the word "comprising" does not exclude other elements or steps, and the indefinite article "a" or "an" does not exclude a plurality. A single unit may fulfil the functions of several features recited in the claims. The terms "essentially", "about", "approximately" and the like in connection with an attribute or a value particularly also define exactly the attribute or exactly the value, respectively. Any reference signs in the claims should not be construed as limiting the scope.

## Claims

1. A method in a mobile device for optically detecting and localizing a two-dimensional, 2D, marker in 2D scene data, comprising the steps of:
a) providing 2D scene data in form of a digital image;
b) thresholding the provided image into a binary black and white image while processing it to detect contiguous areas within the image;
c) sequential labelling of objects in the binary image in order to find connected components, wherein in a single pass of the image every pixel is labelled as either belonging to the background or a foreground object with unique ID; and
d) linearly analyzing said contiguous areas to determine whether they are a marker, wherein step d) comprises a step of calculating the Euler number of white areas in the thresholded binary image, the method further comprising the steps of comparing the calculated Euler numbers of the white areas with the given Euler number of the marker to be detected and discarding those white areas whose Euler number does match with the given Euler number;
e) detecting the corners of contiguous areas within the image whose Euler number matches with the given Euler number;
f) estimating hidden corners, comprising the steps of:
1) choosing two end points amongst consecutive pairs of detected comers;
2) collecting a sample of points along the marker boundary between the two end points;
3) estimating the parameters of two line candidates;
4) assigning to each line its member points amongst the sampled points, wherein every point belongs to that line to which it is nearest, thereby obtaining two sets of member points;
5) for each of the two sets of member points, refitting a line to estimate the line they lie on, wherein the two lines correspond to estimates of the marker edges; and
6) repeating steps 4) and 5) until convergence;
g) repeating previous steps 1)-6) clockwise until four valid corners are found;
the method further comprising a step of constantly updating the threshold, wherein the marker position in the previous frame of the digital image is used to re-compute a threshold for the next frame;
wherein the marker comprises a marker pattern comprising a white square component with three black square areas centred thereon and forming an triangle, and further comprising a black border area enclosing said white square component, and the method further comprising a step of determining the centroids of the three black areas within the marker, and a step of determining which two black areas are parallel to any side of the square from the computed marker edge lines.

2. The method of any of the preceding claims, wherein step b) comprises a step of receiving a user input pointing to the general location of the marker in the image.

3. The method of claim 2, wherein a region around this user inputted location is then used to automatically determine the appropriate threshold.

4. The method any one of the preceding claims, comprising a step of analyzing the bounding areas of the contiguous areas by scanning along every bounding box edge for a cluster with white pixels.

5. The method claim 4, comprising a step of sampling from two opposite directions along each single boundary edge until occurrences of a cluster with white pixels.

6. The method of any of the preceding claims, wherein step a) provides a continuous sequence of image frames.

7. The method of any of the preceding claims, wherein the step of providing 2D scene data comprises acquiring in electronic memory an image of the 2D scene.

8. A mobile device adapted to optically detect and localize a two-dimensional, 2D, marker in 2D scene data, comprising:
a camera for providing 2D scene data in form of a digital image;
a processor being configured for performing the method of any of the preceding claims.

9. A system for optically detecting and localizing a two-dimensional, 2D, marker in 2D scene data, comprising:
a camera for providing 2D scene data in form of a digital image;
a processor being configured for performing the method of any of claims 1 to 7.

10. A computer-readable medium having recorded thereon computer-executable instructions for implementing the method as defined in any one of claims 1-7.

## Patentansprüche

1. Verfahren in einer Mobilvorrichtung zum optischen Erkennen und Orten einer zweidimensionalen (2D)-Markierung in 2D-Szenendaten, das die Schritte aufweist:
a) Bereitstellen von 2D-Szenendaten in Form eines digitalen Bilds;
b) Schwellwertbildung des bereitgestellten Bilds zu einem binären Schwarzweißbild, während es verarbeitet wird, um zusammenhängende Bereiche im Bild zu erkennen;
c) sequentielles Kennzeichnen von Objekten im binären Bild, um verbundene Komponenten zu finden, wobei in einem einzigen Durchgang des Bilds jedes Pixel als zum Hintergrund oder einem Vordergrundobjekt gehörend mit einer eindeutigen ID gekennzeichnet wird; und
d) lineares Analysieren der zusammenhängenden Bereiche, um festzustellen, ob sie eine Markierung sind, wobei der Schritt d) einen Schritt des Berechnens der Euler-Zahl von weißen Bereichen im schwellwertgebildeten binären Bild aufweist, wobei das Verfahren ferner die Schritte des Vergleichens der berechneten Euler-Zahlen der weißen Bereiche mit der gegebenen Euler-Zahl der zu erkennenden Markierung und des Verwerfens jener weißen Bereiche aufweist, deren Euler-Zahl mit der gegebenen Euler-Zahl übereinstimmt;
e) Erkennen der Ecken von zusammenhängenden Bereichen im Bild, der Euler-Zahl mit der gegebenen Euler-Zahl übereinstimmt;
f) Schätzen von verborgenen Ecken, das die Schritte aufweist:
1) Auswählen von zwei Endpunkten unter aufeinanderfolgenden Paaren von erkannten Ecken;
2) Sammeln eines Abtastwerts von Punkten längs der Markierungsbegrenzung zwischen den beiden Endpunkten;
3) Schätzen der Parameter von zwei Linienkandidaten;
4) Zuordnen zu jeder Linie ihrer Mitgliedspunkte unter den abgetasteten Punkten, wobei jeder Punkt zu der Linie gehört, der er am nächsten ist, wodurch zwei Sätze von Mitgliedspunkten erhalten werden;
5) für jeden der beiden Sätze von Mitgliedspunkten erneutes Anpassen einer Linie, um die Linie zu schätzen, auf der sie liegen, wobei die beiden Linien den Schätzwerten der Markierungskanten entsprechen; und
6) Wiederholen der Schritte 4) und 5) bis zur Konvergenz;
g) Wiederholen der vorhergehenden Schritte 1)-6) im Uhrzeigersinn, bis vier gültige Ecken gefunden werden;
wobei das Verfahren ferner einen Schritt des ständigen Aktualisierens des Schwellenwerts aufweist, wobei die Markierungsposition im vorhergehenden Rahmen des digitalen Bilds verwendet wird, um einen Schwellenwert für den nächsten Rahmen neu zu berechnen;
wobei die Markierung ein Markierungsmuster aufweist, das eine weiße quadratische Komponente mit drei schwarzen quadratischen Bereichen aufweist, die darauf zentriert sind und ein Dreieck bilden, und ferner einen schwarzen Begrenzungsbereich aufweist, der die weiße quadratische Komponente einschließt, und das Verfahren ferner einen Schritt des Feststellens der Schwerpunkte der drei schwarzen Bereiche innerhalb der Markierung und einen Schritt des Feststellens, welche zwei schwarze Bereiche parallel zu irgendeiner Seite des Quadrat sind, aus den berechneten Markierungskantenlinien aufweist.

2. Verfahren nach einem der vorhergehenden Ansprüche, wobei der Schritt b) einen Schritt des Empfangens einer Benutzereingabe aufweist, die auf den allgemeinen Ort der Markierung im Bild zeigt.

3. Verfahren nach Anspruch 2, wobei eine Region um diesen vom Benutzer eingegebenen Ort dann verwendet wird, um automatisch den geeigneten Schwellenwert festzustellen.

4. Verfahren nach einem der vorhergehenden Ansprüche, das einen Schritt des Analysierens der Begrenzungsbereiche der zusammenhängenden Bereiche durch Abtasten längs jeder Begrenzungsboxkante für ein Cluster mit weißen Pixeln aufweist.

5. Verfahren nach Anspruch 4, das einen Schritt des Abtastens aus zwei entgegengesetzten Richtungen längs jeder einzelnen Begrenzungskante bis zum Erscheinen eines Clusters mit weißen Pixeln aufweist.

6. Verfahren nach einem der vorhergehenden Ansprüche, wobei der Schritt a) eine kontinuierliche Sequenz von Bildrahmen bereitstellt.

7. Verfahren nach einem der vorhergehenden Ansprüche, wobei der Schritt des Bereitstellens von 2D-Szenendaten das Erfassen eines Bilds der 2D-Szene in einem elektronischen Speicher aufweist.

8. Mobilvorrichtung, die eingerichtet ist, eine zweidimensionale (2D)-Markierung in 2D-Szenendaten optisch zu erkennen und zu orten, die aufweist:
eine Kamera zum Bereitstellen von 2D-Szenendaten in Form eines digitalen Bilds;
einen Prozessor, der zum Ausführen des Verfahrens nach einem der vorhergehenden Ansprüche konfiguriert ist.

9. System zum optischen Erkennen und Orten einer zweidimensionalen (2D)-Markierung in 2D-Szenendaten, das aufweist:
eine Kamera zum Bereitstellen von 2D-Szenendaten in Form eines digitalen Bilds;
einen Prozessor, der zum Ausführen des Verfahrens nach einem der Ansprüche 1 bis 7 konfiguriert ist.

10. Computerlesbares Medium, auf dem computerausfizhrbare Befehle zum Umsetzen des Verfahrens nach einem der Ansprüche 1 bis 7 aufgezeichnet sind.

## Revendications

1. Procédé, dans un dispositif mobile, de détection optique et de localisation d'un marqueur bidimensionnel, 2 D, dans des données de scène 2 D, comprenant les étapes de :
a) fourniture de données de scène 2 D sous la forme d'une image numérique ;
b) seuillage de l'image fournie en une image binaire en noir et blanc, par traitement de celle-ci pour détecter des zones contiguës à l'intérieur de l'image ;
c) étiquetage séquentiel d'objets dans l'image binaire afin de trouver des composants liés, chaque pixel étant étiqueté comme appartenant soit à l'arrière-plan soit à un objet de premier plan à identifiant unique en un seul passage de l'image ; et
d) analyse linéaire des zones contiguës afin de déterminer si celles-ci sont un marqueur, l'étape d) comprenant une étape de calcul du nombre d'Euler pour les zones blanches dans l'image binaire seuillée, le procédé comprenant en outre les étapes de comparaison des nombres d'Euler calculés pour les zones blanches avec le nombre d'Euler donné pour le marqueur à détecter, et de rejet des zones blanches dont le nombre d'Euler correspond au nombre d'Euler donné ;
e) détection des coins des zones contiguës à l'intérieur de l'image dont le nombre d'Euler correspond au nombre d'Euler donné ;
f) estimation des coins cachés, comprenant les étapes de :
1) sélection de deux points d'extrémité parmi les paires successives de coins détectés ;
2) prélèvement d'un échantillon de points le long de la limite de marqueur entre les deux points d'extrémité ;
3) estimation des paramètres de deux lignes candidates ;
4) affectation à chaque ligne de ses points membres parmi les points prélevés, chaque point appartenant à la ligne dont il est le plus proche, deux ensembles de points membres étant ainsi obtenus ;
5) pour chacun des deux ensembles de points membres, réajustement d'une ligne pour estimer la ligne où ils se trouvent, les deux lignes correspondant à des bords de marqueur estimés ; et
6) répétition des étapes (4) et (5) jusqu'à convergence ;
g) répétition des étapes 1) à 6) dans le sens d'une montre jusqu'à ce que quatre coins valides soient trouvés ;
ledit procédé comprenant en outre une étape de mise à jour constante du seuil, la position de marqueur dans la précédente trame de l'image numérique étant utilisée pour recalculer un seuil pour la trame suivante ;
le marqueur comprenant un motif de marqueur comprenant un composant à carré blanc avec trois zones carrées noires centrées dans celui-ci et formant un triangle, et comprenant un outre une zone de bord noire entourant le composant à carré blanc, et ledit procédé comprenant en outre une étape de détermination des centroïdes des trois zones noires à l'intérieur du marqueur, et une étape de détermination des deux zones noires parallèles à un côté du carré depuis les lignes de bord de marqueur calculées.

2. Procédé selon l'une des revendications précédentes, où l'étape b) comprend une étape de réception d'une entrée d'utilisateur pointant l'emplacement général du marqueur dans l'image.

3. Procédé selon la revendication 2, où une région autour de cet emplacement entré par l'utilisateur est ensuite exploitée pour déterminer automatiquement le seuil approprié.

4. Procédé selon l'une des revendications précédentes, comprenant une étape d'analyse des zones de limite des zones contiguës par balayage d'un cluster de pixels blancs le long de chaque bord limite de boîte.

5. Procédé selon la revendication 4, comprenant une étape d'échantillonnage depuis deux directions opposées le long de chaque bord limite individuel jusqu'à apparition d'un cluster de pixels blancs.

6. Procédé selon l'une des revendications précédentes, où l'étape a) fournit une séquence continue de trames d'image.

7. Procédé selon l'une des revendications précédentes, où l'étape de fourniture de données de scène 2 D comprend l'acquisition en mémoire électronique d'une image de la scène 2 D.

8. Dispositif mobile prévu pour la détection optique et la localisation d'un marqueur bidimensionnel, 2 D, dans des données de scène 2 D, comprenant :
une caméra destinée à fournir des données de scène 2 D sous la forme d'une image numérique ;
un processeur prévu pour exécuter le procédé selon l'une des revendications précédentes.

9. Système pour la détection optique et la localisation d'un marqueur bidimensionnel, 2 D, dans des données de scène 2 D, comprenant :
une caméra destinée à fournir des données de scène 2 D sous la forme d'une image numérique ;
un processeur prévu pour exécuter le procédé selon l'une des revendications 1 à 7.

10. Support lisible par ordinateur, où sont enregistrées des instructions exécutables par ordinateur pour exécuter le procédé selon l'une des revendications 1 à 7.
